Europäisches Patentamt

European Patent Office

Office européen des brevets

(11) Publication number: **0 062 129**
A2

# EUROPEAN PATENT APPLICATION

(21) Application number: **81305851.8**

(22) Date of filing: **11.12.81**

(51) Int. Cl.³: **B 28 C 7/06,** B 28 C 5/00,
B 28 C 5/08, B 28 C 5/14,
B 28 C 9/02, B 28 C 7/12,
B 65 B 69/00, F 04 B 15/02

(30) Priority: **27.03.81 GB 8109767**

(43) Date of publication of application: **13.10.82**
**Bulletin 82/41**

(84) Designated Contracting States: **AT BE CH DE FR GB IT
LI LU NL SE**

(71) Applicant: **MONO PUMPS LIMITED, Arnfield Works
Martin Street, Audenshaw Manchester M34 5JA (GB)**

(72) Inventor: **Stevenson, Christopher, 2 Carr Braw, Disley
Cheshire (GB)**

(74) Representative: **Allen, William Guy Fairfax, J.A. KEMP &
CO. 14 South Square Gray's Inn, London WC1R 5EU (GB)**

(54) Method and apparatus for producing cement or plaster.

(57) A method and apparatus for forming a cement or
plaster slurry wherein bags of cement or plaster are fed into
a macerator, to comminute the bag material and to mix it
with the cement or plaster, the resulting mixture is fed into
a chamber into which water is also fed at a controlled rate
and mixed with it, the resulting product being pumped to a
point of use. The pumping is preferably carried out by a
helical gear pump having a feed auger which has a reverse
pitch flight therein to assist in the mixing of the macerated
bag material and cement with the water.

- 1 -

DESCRIPTION

METHOD AND APPARATUS FOR PRODUCING CEMENT OR PLASTER

The present invention relates to a method and apparatus for forming a cement or plaster slurry.

It is a common expedient in mines, such as coal mines, to produce a cement or plaster slurry, and to line the walls of the shafts of the mine with this slurry. This can have the effect of sealing the walls against seepage from water, and, more importantly, to prevent the passage of air through the walls of the tunnels. In most mines, ventilating air is forced down one tunnel and back down another tunnel. It is important, therefore, that there should be no flow path for the air other than at the mining face, because this will cause a bypass, thus reducing the ventilation provided.

Conventionally, the cement has been mixed at or near the point of use, by feeding it into a wide mouthed helical gear pump, together with water, and pumping the the resulting slurry to the point of use. In order to do this, the cement bags are opened and are tipped into the wide mouthed helical gear pump. It has been found that this produces a considerable amount of cement (or plaster) dust which is a health hazard. Furthermore, a large number of empty cement bags are produced and this produces a fire hazard. These bags, of course, have to be removed and disposed of through the normal waste collecting channels.

It is now proposed, according to the present invention, to provide a method of forming a cement or plaster slurry, said method comprising feeding bags of cement or plaster into a macerator, to comminute the bag material and to mix it with the cement or plaster, feeding the resulting mixture into a chamber, feeding water into the chamber at a controlled rate and mixing it with said resulting mixture, and pumping the resulting product to a point of use.

According to this method, no dust is produced, because the whole bag is fed directly into the macerator and does not have to be opened prior to mixing with the water. Furthermore, no empty cement or plaster bags are left, since these are comminuted in the macerator and become mixed up in the cement or plaster slurry. It has been found that the presence of the fibres of the bag material, which is usually paper, have little or no harmful effect on the resulting slurry.

The bags are preferably fed endwise into the centre of the macerator so that there is no chance of the bag getting into a position in which it "bridges" the cutters of the macerator. Advantageously, the resulting product is pumped on with a positive displacement pump, such as a helical gear pump. Preferably this is a wide mouthed helical gear pump having an auger with a reverse pitch flight in it, so that the resulting product is fed back, in part, to increase the mixing effect with the water.

The invention also provides apparatus for forming a cement or plaster slurry, said apparatus comprising a macerator having an inlet and an outlet, means permitting bags of cement or plaster to be fed to the inlet of said macerator, a chamber connected to the outlet of the macerator, a water inlet to said chamber, means for feeding water at a controlled rate to said chamber via said water inlet and a pump having its inlet connected to the outlet of the chamber.

As indicated above, the pump is preferably a wide mouth helical gear pump. The means permitting

- 3 -

bags of cement or plaster to be fed into said chamber may comprise an inlet chute shaped to feed a bag edgewise into the centre of the macerator. In fact the chute is preferably of rectangular cross-section, the dimensions being slightly larger than those of a standard cement or plaster bag, and the axis of the chute is curved, so that an operator can readily feed the bag into the upper end of the chute. Advantageously, the chute is provided with a dust flap, such as a rubber flap, so that there will be little, if any, chance of the dust getting into the surroundings of the apparatus.

The macerator preferably comprises a housing, a pair of contrarotating parallel shafts mounted in the housing, alternate toothed cutters and spacers carried on each shaft, the cutters of one shaft interfitting with those of the other shaft and moving in close peripheral proximity to the spacer of the other shaft.

The arrangement of the apparatus can be very simple with the chute mounted on top of the macerator, and the macerator mounted on top of the chamber and the chamber mounted on top of the wide mouth inlet to the pump, so that the cement or plaster and water flow by gravity into the pump.

In order that the present invention may more readily be understood, the following description is given, merely by way of example, reference being made to the accompanying drawings, in which:-

Figure 1 is a schematic front elevation of one embodiment of apparatus for carrying out the method of the invention;

Figure 1A is a fragmentary side elevation showing the chute of the apparatus of Figure 1; and

- 4 -

Figure 2 is an enlarged side elevational view of the macerator used in the apparatus of Figure 1.

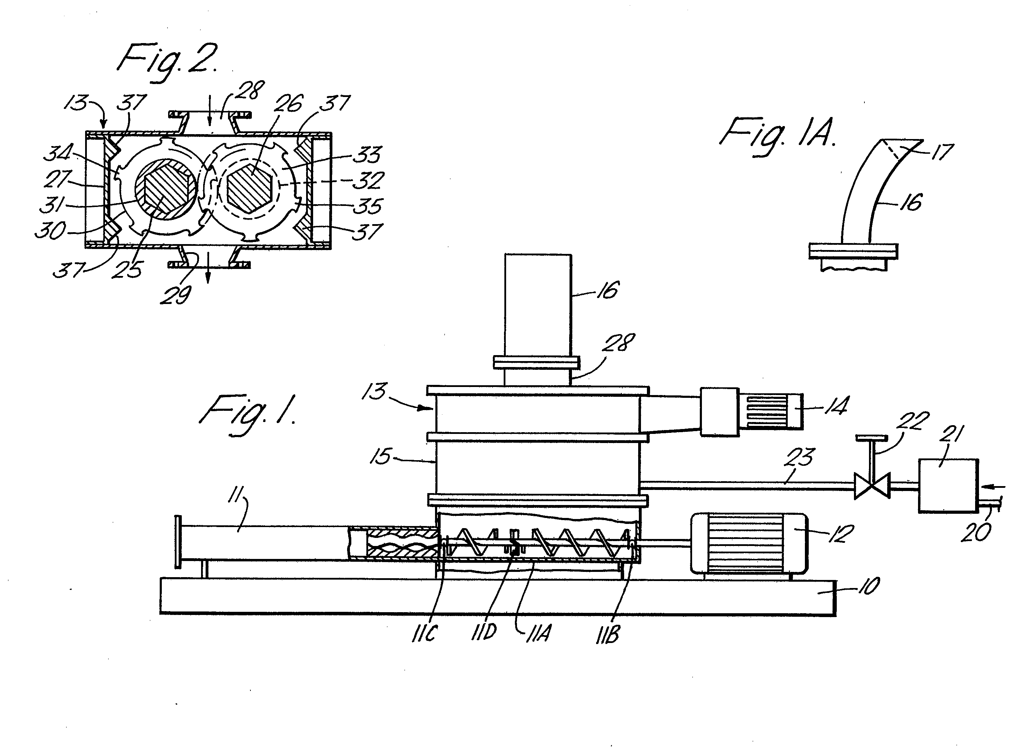

Referring to Figure 1, the apparatus comprises a base 10 upon which is mounted a helical gear pump 11 having a wide mouthed auger portion 11A. Both the auger and the rotor of the helical gear pump are driven by a motor 12 which is also mounted on the base 10. Part of the helical gear pump is shown in section and it can be seen that the rotor is connected via a universal joint 11C to the shaft of the auger 11A and the other end of the shaft of the auger is connected via a further universal joint 11B to the shaft of the motor 12. A reverse pitch flight 11D on the auger is provided at the end nearer the helical gear pump inlet, so that some of the material being fed by the auger to the pump is passed back again to increase the mixing effect.

The wide mouth of the auger portion 11A serves to support a chamber or hopper 15 on top of which is mounted a macerator 13 which is driven by a second motor 14. Details of the construction of the macerator 13 are given below in the description, with reference to Figure 2.

Mounted on top of the macerator 13 and connected to its inlet is a feed chute 16 which, as can be seen from Figure 1A, has a curved axis, the chute being of rectangular cross-section, the dimensions being such as to be slightly larger than those of a conventional bag of cement or plaster. A flap 17 is provided near the top of the chute 16.

The apparatus also includes a water feed supply 20 which is connected, via a water flow meter 21, and a control valve 22 to an inlet pipe 23 which enters the housing 15.

Referring now to Figure 2, it will be seen that the macerator indicated by the general reference numeral 13 includes two contrarotating shafts 25 and 26 mounted in a generally rectangular housing 27. The housing is provided with an inlet 28 at the top and an outlet 29 at the bottom.

Mounted on the shaft 25 are alternate cutters 30 and spacers 31, whilst on the shaft 26 are mounted alternate spacers 32 and cutters 33 interfitting with the spacers and cutters of the shaft 25. It will be seen that the teeth 34 of the cutter 30 are each symmetrical and are spaced a small distance from the spacer 32 and the shaft 26. Similarly, the interfitting cutters 33 have their teeth 35 spaced a small distance from the periphery of the spacers 31 and the shaft 25. This arrangement gives a fine comminuting action on the material fed into the inlet 28 and gravity and the rotation of the shafts (which is indicated by the arrows) causes the material to be mixed and comminuted and forced out through the outlet 20. It will be seen that the housing includes four inwardly extending projections 37 which conform to the shape of the teeth of the cutters and this assists in the comminuting action.

In use, for example to provide a surfacing of the walls of a mine tunnel, the apparatus is mounted in the mine tunnel and the water inlet 20 is connected to a suitable water supply. Bags of cement or plaster, depending on the task to be carried out, are fed in through the flap 17 into the inlet chute 16 and slide down the chute 16 directly into the inlet 28 of the comminuter and thus directly to the cutters. The provision of the chute of this rectangular cross-sectional shape and curved axis facilitates the introduction of the bags from the side and furthermore, ensures that the bags pass straight into the cutter

- 6 -

without there being any chance of bridging. The cement or plaster and the bag itself are drawn into the macerator 13 which serves to mix the cement or plaster with the bag material, which is usually paper. Whilst paper is the most common material for cement or plaster bags, it is believed that the method of the invention would be equally suitable if plastics material bags were used.

The mixed cement or plaster together with the finely divided bag material and water fed in via the inlet 23 at a controlled rate determined by the valve 22 and the meter 21, pass into the auger section 11A from a helical gear pump 11. As indicated above, one of the flights 11D of the auger near the pump rotor is of reverse pitch so that a measure of further mixing can take place because some of the material will be urged backwardly against the generally forward stream. The pump will simply pump the material onto the point of use.

It has been found advantageous to mix the water with the comminuted bag material and cement or plaster when the latter are in the dry state, this giving a better mixing effect.

It will be appreciated that there is no dust hazard produced in the method because the bag is opened in the macerator and is isolated from the exterior by the chute and the flap 17 at the top end thereof. Furthermore, there will be no creation of large quantities of empty cement or plaster bags, since these are simply chopped up in the macerator and form part of the resulting slurry.

- 7 -

CLAIMS

1. A method of forming a cement or plaster slurry, in which the cement or plaster and water are mixed and pumped to a point of use, characterised in that the bags of cement or plaster are fed into a macerator (13), to comminute the bag material and to mix it with the cement or plaster, in that the resulting mixture is fed into a chamber (15), in that water is fed into the chamber at a controlled rate and mixed with the resulting mixture, and in that the resulting product is then fed to a point of use.

2. A method according to claim 1, characterised in that the bags are fed endwise into the centre of the macerator.

3. A method according to claim 1 or 2, characterised in that the resulting product is pumped on with a positive displacement helical gear pump (11).

4. A method according to claim 3, characterised in that said pump is a wide-mouthed helical gear pump with having an auger (11A) with a reverse pitch flight (11D) adjacent the pump, whereby the resulting product is fed back, in part, to increase the mixing effect with the water.

5. Apparatus for forming a cement or plaster slurry, said apparatus including a pump, characterised in that it comprises a macerator (13) having an inlet (28) and an outlet (29), means (16) permitting bags of cement or plaster to be fed to the inlet of said macerator, a chamber (15) connected to the outlet of the macerator, a water inlet (23) to said chamber, means (21,22) for feeding water at a controlled rate to said chamber via said water inlet and a pump (11) having its inlet connected to the outlet of the chamber.

- 8 -

6.    Apparatus according to claim 5,
characterised in that the pump (11) is a wide-mouthed
helical gear pump having an auger (11A) with a
reverse pitch flight (11D) adjacent the pump so that the
resulting product is fed back, in part, to increase
the mixing effect with the water.

7.    Apparatus according to claim 5 or 6,
characterised in that the means permitting bags of
cement or plaster to be fed into said chamber (15)
comprise an inlet chute (16) shaped to feed a bag
edgewise into the centre of the macerator.

8.    Apparatus according to claim 7,
characterised in that the chute is of a rectangular
cross-section, its dimensions being slightly larger than
those of a standard cement or plaster bag, and in that
the axis of the chute is curved, so that an operator
can readily feed the bag into the upper end of the
chute.

9.    Apparatus according to claim 7 or 8,
characterised in that the chute is provided with a dust
flap (17) to reduce the chance of dust getting into the
surroundings of the apparatus.

10.    Apparatus according to claim 7, 8 or 9,
characterised in that the chute (16) is mounted on the
top of the macerator (13), the macerator is mounted
on the top of the chamber (15) and the chamber is
mounted on the top of the wide-mouthed inlet to the pump
so that the cement or plaster and water flow by gravity
into the pump.

Fig. IA.

Fig. I.

Fig. 2.